# EUROPEAN PATENT APPLICATION

(11) **EP 3 904 190 A1**
(43) Date of publication of application: **03.11.2021**
(21) Application number: 20187013.6
(22) Date of filing: 21.07.2020
(51) Int. Cl.: B62J 1/18

(54) **SADDLE CUSHION FOR BICYCLE**

(30) Priority: 27.04.2020 CN 202020664598 U
(71) Applicant: Dongguan Mangrove Sports Limited, Dongguan city, Guangdong 523163 (CN)
(72) Inventor: ZHENG, Yiwen, Dongguan city, Guangdong 523160 (CN)
(74) Representative: Twelmeier Mommer & Partner

(57) **Abstract**

A saddle cushion (10) for bicycle is proposed, comprising: a cushion body (1) having a shape corresponding to a bicycle saddle (20); and a sheet-like adhesive member (2), which has a first side fixedly connected to a bottom side of the cushion body (1), and a second side bonded to a surface side of the bicycle saddle (20).

## Description

### Technical Field

The present invention relates to the technical field of bicycle, in particular to a saddle cushion for bicycle.

### Technical Background

Current bicycle saddles available on the market are relatively rigid. Especially, the saddles of mountain bikes and track bikes are generally elongate and highly rigid. Therefore, in order to improve riding comfort, consumers usually purchase an additional bicycle saddle cushion and mount it on such a saddle.

However, in the prior arts, the bicycle saddle cushion is usually fixed to the bicycle saddle in form of a drawstring pocket. The fixing effect provided by this method is far from satisfactory, so that the saddle cushion cannot be stably connected with the bicycle saddle. The user will perceive obvious slip of the saddle cushion when riding, and sometimes the saddle cushion may even fall off from the bicycle saddle.

Therefore, a saddle cushion for bicycle which can be fixedly mounted on the bicycle saddle is urgently needed in the field.

### Summary of the Invention

Aiming to solve at least part or all of the aforementioned technical problems existing in the prior arts, the present invention proposes a saddle cushion for bicycle. The saddle cushion includes an adhesive member, which can be bonded on a saddle of the bicycle, so as to ensure a stable connection between the saddle cushion and the bicycle saddle.

According to the present invention, a saddle cushion for bicycle is proposed, comprising: a cushion body having a shape corresponding to a bicycle saddle; and a sheet-like adhesive member, which has a first side fixedly connected to a bottom side of the cushion body, and a second side bonded to a surface side of the bicycle saddle.

In one embodiment, the second side of the adhesive member is formed as a PU surface, and a bonding area of the adhesive member with the bicycle saddle is not less than 20% of a total area of the surface side of the bicycle saddle.

In one embodiment, the adhesive member comprises: a supporting layer, which has a first face that is fixed on the bottom side of the cushion body by sewing; and a PU layer composited on a second face of the supporting layer.

In one embodiment, the adhesive member is made of PU, and a convex strip protruding outwardly is provided on the second side of the adhesive member.

In one embodiment, the convex strip is configured as a wavy strip extending laterally, or configured to include a diamond-like strip and a linear strip both extending laterally.

In one embodiment, the adhesive member includes a front nose portion and a rear tail portion arranged separately from the front nose portion, the front nose portion and the rear tail portion both being symmetrical with respect to a longitudinal centerline of the cushion body.

In one embodiment, the rear tail portion is configured to include a right rear tail part and a left rear tail part that are symmetrical to each other with respect to the longitudinal centerline of the cushion body, and inner ends of the front nose portion and the rear tail portion each are configured to protrude inwardly in an arcuate shape.

In one embodiment, an inner contour line of the adhesive member is formed with teeth.

In one embodiment, the adhesive member includes a plurality of PU layers laminated together in a direction from the bottom side to the surface side.

In one embodiment, the adhesive member has a shape selected from a group consisting of square, circle, triangle, plum blossom, polygon and ellipse, and wherein multiple adhesive members are provided, in which the adhesive members have a same thickness or different thicknesses, or wherein only one adhesive member is provided, in which the adhesive member has a uniform thickness or varied thickness.

### Brief Description of the Drawings

In the following the preferred embodiments of the present invention will be described in detail with reference to the accompanying drawings. In the drawings:
Fig. 1 shows a perspective view of a saddle cushion for bicycle according to an embodiment of the present invention;
Fig. 2 shows a bottom view of the saddle cushion for bicycle according to the embodiment of the present invention;
Fig. 3 shows a top view of the saddle cushion for bicycle according to the embodiment of the present invention;
Fig. 4 shows an adhesive member according to an embodiment of the present invention;
Fig. 5 shows an adhesive member according to another embodiment of the present invention; and
Fig. 6 shows a bottom view of a saddle cushion for bicycle according to another embodiment of the present invention.

In the drawings, the same reference numerals are used to indicate the same components. The drawings are not drawn to actual scale.

### Detailed Description of the Embodiment

The present invention will be further described below with reference to the accompanying drawings.

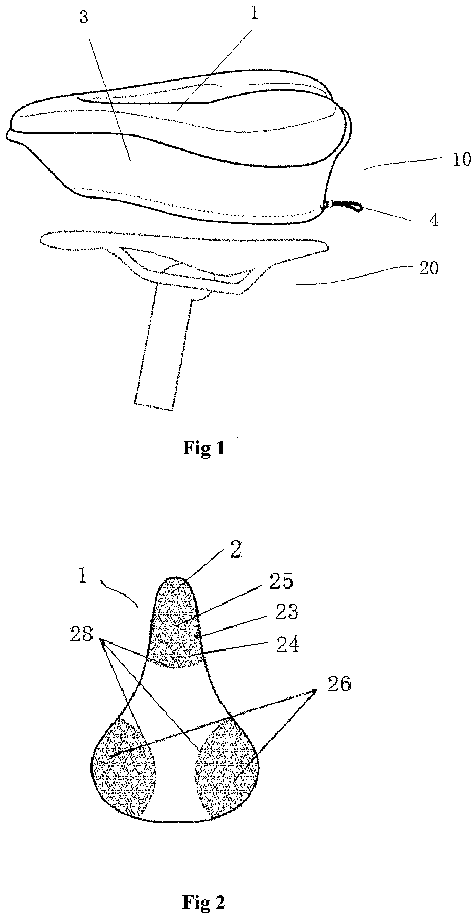

Fig. 1 shows a saddle cushion for bicycle according to the present invention. As shown in Fig. 1, the saddle cushion 10 for bicycle includes a cushion body 1 and an adhesive member 2 (shown in Fig. 2). The cushion body 1 has a shape corresponding to the shape of a saddle 20 of the bicycle, so that it can be arranged on a surface side (i.e., the upper side in Fig. 1) of the saddle 20. The adhesive member 2 is configured as a sheet-like member, which has a first side that can be fixedly connected to a bottom side of the cushion body 1, and a second side that can be bonded to the surface side of the saddle 20. In the context, the term "fixed connection" or the like used herein may be a connection achieved by, e.g., bonding or sewing, as described later. When the saddle cushion 10 is mounted on the saddle 20, the first side of the adhesive member 2 is fixedly connected to the bottom side of the cushion body 1, while the second side thereof is bonded to the surface side of the saddle 20. In this manner, a firm connection between the saddle cushion 10 and the saddle 20 can be ensured, so that any sliding movements can be avoided.

In one embodiment, at least the second side of the adhesive member 2 is formed as a polyurethane (PU) surface. In a specific embodiment, the adhesive member 2 is entirely made of PU. This arrangement makes use of PU's inherent characteristic, so that the first side of the adhesive member 2 can be fixedly connected to the cushion body 1 while the second side thereof is fixedly connected to the saddle 20, both in a bonding manner. At the same time, the adhesive member 2 provided in this way can not only satisfy the requirement on firm bonding the cushion body 1 with the saddle 20, but also utilizes the elasticity of PU to ensure the user's comfort. In addition, the PU portion can be repeatedly used. For example, when the cushion body 1 is intended to be cleaned, the adhesive member 2 can be removed from the cushion body 1 for subsequent use.

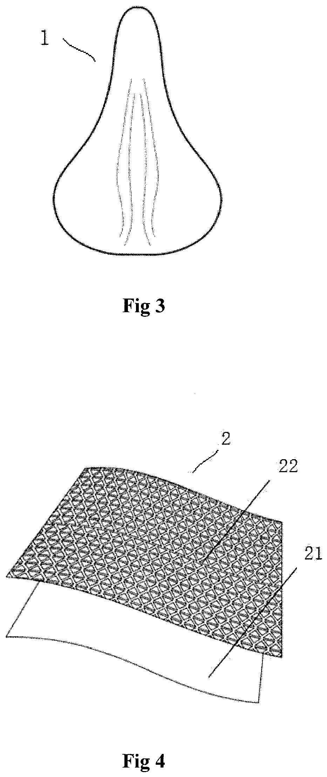

In a preferred embodiment, the adhesive member 2 includes a supporting layer 21, and a PU layer 22 that is composited on a second face of the supporting layer 21, as shown in Fig. 4. The supporting layer 21 is intended to be arranged on the bottom side of the cushion body 1, while the PU layer 22 is intended to be bonded to the surface side of the bicycle saddle 20. For example, the supporting layer 21 may be made from cloth, leather material, or the like, so that the adhesive member 2 can not only have adhesive capability, but also have tear resistance like the cloth or leather material. By forming the PU layer on the cloth or other materials, the strength and tear resistance of the adhesive member 2 are both increased, thus avoiding fractures caused by long-term use of the adhesive member 2 and damages generated during repeated mounting and dismantling thereof. In this manner, the service life of the adhesive member 2 can be further enhanced.

As a component for connecting the saddle 20 with the cushion body 1, the adhesive member 2 is likely to be separated from the cushion body 1 when the cushion body 1 is removed from the saddle 20. In this case, the adhesive member 2 will remain adhered to the saddle 20. However, it is desirable that in actual use, the saddle cushion 10 should be entirely separated from the saddle 20 first; that is, the adhesive member 2 should be preferably stripped off from the saddle 20 together with the cushion body 1. With the adhesive member 2 having the above-mentioned structure consisting of the supporting layer 21 and the PU layer 22, the adhesive member 2 can be sewn on the bottom surface of the cushion body 1 through the supporting layer 21, thus ensuring a stable connection between the adhesive member 2 and the cushion body 1, and in the meantime facilitating the separation of the adhesive member 2 from the saddle 20.

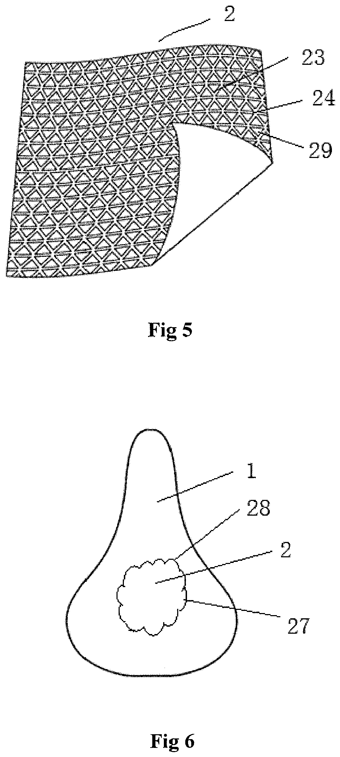

No matter the adhesive member 2 is entirely made of PU, or includes a receiving layer 21, at least one convex strip 23 protruding outwardly may be provided on the second side of the adhesive member 2, as shown in Fig. 5. Such a convex strip 23 may also be provided on both of the first side and the second side of the adhesive member 2. By providing the convex strip 23, the adhesive strength of the side of the adhesive member 2 can be adjusted, so as to meet different usage requirements. In general, when the adhesive surface is very smooth and the area thereof in contact with the PU is the largest, the bonding strength will reach its maximum, and vice versa. According to this principle, when the adhesive member 2 is purely made of PU, the adhesive strength of one side of the adhesive member 2 can be adjusted by providing the convex strip 23 on this side of the adhesive member 2. Therefore, different sides of the adhesive member 2 can be made of different materials, so as to achieve different purposes. For example, by providing the convex strip 23 on the second side of the adhesive member 2, the viscosity of the second side will be smaller than that of the first side, so that the bonding strength of the adhesive member 2 to the cushion body 1 can be ensured to be greater than that of the adhesive member 2 to the saddle 20. In this case, during the operation of removing the saddle cushion 10 from the saddle 20, the adhesive member 2 will be completely stripped off from the saddle 20 together with the cushion body 1.

In one embodiment, the convex strip 23 may be configured as a wavy strip extending laterally. Alternatively, in the embodiment as shown in Fig. 5, the convex strip 23 may be configured to include a diamond-like strip 29 extending laterally, and a linear strip 24 extending laterally. This arrangement is in conformity with human kinematics, and improves the capability of the adhesive member 2 to resist longitudinal forces.

In a preferred embodiment, as shown in Fig. 2, the adhesive member 2 includes a front nose portion 25, and a rear tail portion 26 separated from the front nose portion 25. Both the front nose portion 25 and the rear tail portion 26 are arranged symmetrically with respect to a longitudinal centerline of the cushion body 1. With this arrangement, it can ensure that the adhesive member 2 will be subjected to uniform force, so as to achieve a stable bonding effect.

In a more preferred embodiment, as shown in Fig. 2, the rear tail portion 26 includes a right rear tail part and a left rear tail part that are symmetrical to each other with respect to the longitudinal centerline of the cushion body 1. That is, the rear tail portion 26 includes two parts separated from each other. Thus, a stable three-point fixing is realized between the cushion body 1 and the saddle 20 through the front nose portion 25 and the two rear tail parts. In addition, the inner ends of the front nose portion 25 and the rear tail portion 26 each are configured to protrude inwardly in an arc shape. This arrangement can increase the bonding area between the adhesive member 2 and the saddle 20, thereby improving the bonding force.

It should be noted that although some specific embodiments of the adhesive member 2 of the present application are described above, the adhesive member 2 of the present application is not limited to the above-mentioned specific shapes. On the contrary, as long as a design of the adhesive member 2 allows the cushion body 1 to be bonded to the saddle 20, it will fall within the scope of protection of the present application. For example, the adhesive member 2 may be formed as having a shape in conformity with the surface side of the saddle 20 and arranged thereon as a whole, or may be configured as having a shape of a circle, a plum blossom or a triangle arranged in the middle portion of the saddle 20, or any other shapes (square, trapezoid, ellipse, polygon, or a shape as shown in Fig. 6) arranged at any position on the bottom side of the cushion body 1.

In addition, in the present application the specific quantity of the adhesive members 2 is not restricted. That is to say, there may be one or more adhesive members 2. When there is a plurality of adhesive members 2, the shapes of the adhesive members 2 may be the same, or may be different from each other. Of course, the adhesive members 2 arranged on the cushion body 1 are preferably symmetrical with respect to the longitudinal centerline of the saddle 20. Moreover, the thickness of the adhesive members 2 may be the same or different from each other. That is, when there is only one adhesive member 2, the thickness of each part of the adhesive member 2 is uniform or uneven; and when there are multiple adhesive members 2, the thickness of each adhesive member 2 may be the same, or different from each other to meet different needs of users. For example, the thickness of the front nose portion 25 may be greater than, for example, 3-8 mm greater than that of the rear tail portion 26, so as to prevent the user from sliding forwardly during riding.

In order to ensure the bonding strength, the surface area of the adhesive member 2 is preferably not less than 20% of the total surface area of the saddle 20 of the bicycle.

In a preferred embodiment, the inner contour line of the adhesive member 2 is formed with teeth, for example, arcuate teeth 27 as shown in Fig. 6. Specifically, the inner contour line refers to a boundary line that is adhered to non-edge parts of the saddle 20. For example, when the adhesive member 2 has a structure as shown in Fig. 2, the inner contour lines 28 of the front nose portion 25 and of the rear tail portion 26 are provided with arcuate teeth 27 (not shown in Fig. 2). When the adhesive member 2 of other shapes are arranged at the middle portion of the saddle 20, as shown in Fig. 6, arcuate teeth 27 are provided on the entire contour line of the adhesive member 2. That is, the entire outer periphery of the adhesive member 2 is formed as the inner contour line 28. Assuming the inner contour line of the adhesive member 2 is a smooth line without teeth, if bonding failure occurs at a part of edge of the adhesive member 2, it will easily spread to adjacent parts thereof. By contrast, in the above-mentioned adhesive member 2 with the arcuate teeth 27, discrete contour areas are formed at the edge of the adhesive member 2. In this way, when part of the arcuate teeth 27 of the adhesive member 2 loses its bonding effect, this phenomenon of bonding failure would not easily spread to other parts of the adhesive member 2.

In another embodiment, the adhesive member 2 can also be configured as a multilayer structure. That is, along a direction from the bottom side (i.e., the side facing the saddle 20) to the surface side (i.e., the side facing the cushion body 1), the adhesive member 2 includes a plurality of PU layers laminated together, for example, two or three layers. This arrangement can properly adjust the thickness of the adhesive member 2 to increase the comfort of use. In addition, during repeated use, the outermost adhesive layer is more likely to fracture or lose adhesion. In this case, the outermost adhesive layer can be discarded, and the intermediate layer is used instead for achieving adhesion.

In addition, as shown in Fig. 1, in a preferred embodiment, the saddle cushion 10 may further include a drawstring pocket 3 which is fixedly arranged around the cushion body 1 and extends substantially vertically, and a drawstring 4 extending around the drawstring pocket 3. Through the above arrangement, the saddle cushion 10 can be arranged to cover the saddle 20, and further fixed by tightening the drawstring 4 around the drawstring pocket 3, thereby increasing the stability of the saddle cushion 10 on the saddle 20.

In the foregoing only preferred embodiments of the present invention are described. However, the scope of protection of the present invention is not limited to these embodiments. Rather, any person skilled in the art can readily make changes or modifications within the technical scope of the present invention disclosed herein, and such changes or modifications should fall within the scope of protection of the present invention. Therefore, the scope of protection of the present invention shall be defined by the appending claims.

## Claims

1. A saddle cushion for bicycle, comprising:
a cushion body having a shape corresponding to a bicycle saddle; and
a sheet-like adhesive member, which has a first side fixedly connected to a bottom side of the cushion body, and a second side bonded to a surface side of the bicycle saddle.

2. The saddle cushion according to claim 1, wherein the second side of the adhesive member is formed as a PU surface, and a bonding area of the adhesive member with the bicycle saddle is not less than 20% of a total area of the surface side of the bicycle saddle.

3. The saddle cushion according to claim 1 or 2, wherein the adhesive member comprises:
a supporting layer, which has a first face that is fixed on the bottom side of the cushion body by sewing; and
a PU layer composited on a second face of the supporting layer.

4. The saddle cushion according to any one of claims 1 to 3, wherein the adhesive member is made of PU, and a convex strip protruding outwardly is provided on the second side of the adhesive member.

5. The saddle cushion according to claim 4, wherein the convex strip is configured as a wavy strip extending laterally, or configured to include a diamond-like strip and a linear strip both extending laterally.

6. The saddle cushion according to any one of claims 1 to 5, wherein the adhesive member includes a front nose portion and a rear tail portion arranged separately from the front nose portion, the front nose portion and the rear tail portion both being symmetrical with respect to a longitudinal centerline of the cushion body.

7. The saddle cushion according to claim 6, wherein the rear tail portion is configured to include a right rear tail part and a left rear tail part that are symmetrical to each other with respect to the longitudinal centerline of the cushion body, and inner ends of the front nose portion and the rear tail portion each are configured to protrude inwardly in an arcuate shape.

8. The saddle cushion according to any one of claims 1 to 7, wherein an inner contour line of the adhesive member is formed with teeth.

9. The saddle cushion according to any one of claims 1 to 8, wherein the adhesive member includes a plurality of PU layers laminated together in a direction from the bottom side to the surface side.

10. The saddle cushion according to any one of claims 1 to 9, wherein the adhesive member has a shape selected from a group consisting of square, circle, triangle, plum blossom, polygon and ellipse, and
wherein multiple adhesive members are provided, in which the adhesive members have a same thickness or different thicknesses, or wherein only one adhesive member is provided, in which the adhesive member has a uniform thickness or varied thickness.
